# NEUE EUROPÄISCHE PATENTSCHRIFT

(11) **EP 0 655 169 B2**
(45) Veröffentlichungstag und Bekanntmachung des Hinweises auf die Entscheidung über den Einspruch: **18.04.2001**
(45) Hinweis auf die Patenterteilung: 08.01.1997
(21) Anmeldenummer: 93915941.4
(22) Anmeldetag: 17.07.1993
(51) Int. Cl.: H01R 39/38, H02K 5/14, H02K 13/00

(54) **BÜRSTENHALTER FÜR ELEKTROMOTOREN**
BRUSH HOLDER FOR ELECTRIC MOTORS
PORTE-BALAI POUR MOTEURS ELECTRIQUES

(30) Priorität: 11.08.1992 DE 4226553
(43) Veröffentlichungstag der Anmeldung: 31.05.1995
(73) Patentinhaber: ITT Automotive Europe GmbH, 60488 Frankfurt am Main (DE)
(72) Erfinder: CSERMAK, Martin, D-74321 Bietigheim-Bissingen (DE); WALTHER, Bernd, D-74321 Bietigheim-Bissingen (DE)
(74) Vertreter: Dreiss, Fuhlendorf, Steimle & Becker
(86) Internationale Anmeldenummer: EP9301885
(87) Internationale Veröffentlichungsnummer: WO9405060

(56) Entgegenhaltungen:
- EP-A- 0 224 053
- EP-A- 0 247 495
- EP-A- 0 291 765
- DE-A- 2 733 130
- DE-A- 3 726 894
- DE-C- 3 149 099
- GB-A- 2 182 501
- JP-A- 6 194 541
- JP-U- 265 084
- US-A- 3 745 393
- US-A- 4 673 836
- US-A- 4 673 837
- US-A- 4 673 838
- US-A- 5 280 210

## Beschreibung

Die vorliegende Erfindung bezieht sich auf einen Bürstenhalter für mit einem Kollektor versehene Elektromotoren nach dem Oberbegriff des Anspruchs 1.

Bei einem derartigen, aus der DE 36 29 634 C2 bekannten Bürstenhalter sind die Köcher für die Kohlebürsten entsprechend deren Ouaderform einstückig aus einem Blech gebogen und an der Tragplatte befestigt. Von den Kohlebürsten ist jeweils eine Anschlußlitze zu einem der an der Tragplatte gehaltenen elektrischen Bauteile geführt. Diese Art des Aufbaus und der Anbringung der Köcher für die Kohlebürsten und der Verbindung der Kohlebürsten mit den elektrischen Bauteilen ist relativ zeitaufwendig und ermöglicht insbesondere keine vollautomatisierte Fertigung eines derartigen Bürstenhalters.

In der US-PS 4673836 ist eine Bürstentrageplatte bekannt, die aus Kunststoff hergestellt ist und zwei Führungskanäle für Kohlebürsten aufweist, die nach oben und nach außen hin offen sind. Die obere Öffnung wird durch eine Platte aus Kunststoff verschlossen, während die Außenöffnungen durch Abschlußstücke, die an der Trageplatte befestigt werden, verschlossen werden.

Diese Anordnung ist relativ schwierig zu montieren und bietet nicht die Möglichkeit, elektrische Bauteile in der Bürstentrageplatte zu integrieren.

Aufgabe der vorliegenden Erfindung ist deshalb, einen Bürstenhalter für mit einem Kollektor versehene Elektromotoren der eingangs genannten Art zu schaffen, der in vollautomatischer Weise montierbar ist.

Zur Lösung dieser Aufgabe sind bei einem Bürstenhalter der eingangs genannten Art im Anspruch 1 angegebenen Merkmale vorgesehen.

Durch die erfindungsgemäßen Maßnahmen ist es möglich, zunächst die aus Kunststoff bestehende Tragplatte ohne besondere zusätzliche Maßnahmen mit einer von oben her offenen, gleichzeitig als Führung ausgebildeten Aufnahme für die Kohlebürsten vorzusehen. Dies ist ohne komplizierte Werkzeuge möglich, dadurch die offene Ausführung Werkzeugschieber oder dgl. nicht notwendig sind. Diese Kohlenbürstenführung bzw. -aufnahme wird danach in einfacher Weise durch das Stanzgitter mit abgedeckt so daß hierdurch der bzw. die vollständigen Köcher entstehen, ohne daß besondere Montagevorgänge von Hand notwendig sind.

Außerdem ist mit der Maßnahme, dass für alle Köcher ein einziges Stanzgitter auf die Tragplatte aufgebracht ist, eine weitere Vereinfachung der Montage des Bürstenhalters erreicht, da in einem einzigen Arbeitsgang alle Köcher vervollständigt werden können.

Dadurch dass der die Kohlenbürstenführung abdeckende Bereich des Stanzgitters mit einer Anschlußfahne versehen ist, ist es möglich, das betreffende Ende der mit der Kohlebürste bereits verbundenen Anschlußlitze mit dem automatisierten Einbringen der Kohlebürste in den Köcher mit der vorgesehenen Anschlußfahne bspw. durch Löten zu verbinden.

Diese Anschlußfahne ist Teil des Stanzgitters und wird durch reine Biegevorgänge in eine entsprechende montagefreundliche Lage gebracht.

Eine die vollautomatische Montage begünstigende Maßnahme ergibt sich durch die Merkmale, dass der die Kohlenbürstenführung überdeckende Bereich des Stanzgitters und die Auschlußfahne mit einen Längsschlitz versehen ist, da mit dem Einbringen der Kohlebürsten deren Anschlußlitzen in dem Längsschlitz geführt werden, was einerseits verhindert, daß die Kohlebürste nach dem Umbiegen des Verschlußlappens und Einfügen einer Druckfeder zur anderen Seite herausfallen kann und andererseits ein Hinführen des betreffenden Endes der Anschlußlitze zur vorgenannten Anschlußfahne gewährleistet.

Mit den Merkmale gemäß Anspruch 2 ist es möglich, auch die Anschlüsse der zu verwendenden elektrischen Bauteile in vollautomatisierter Weise vorzunehmen.

Wird bspw. eine Drossel als Entstörelement notwendig, so ist es ohne weiteres möglich, zwischen den beiden Anschlußfahnen für diese Drossel gemäß den Merkmalen des Anspruchs 3 durch bspw. Stanzen oder dgl. eine Trennstelle vorzusehen.

Eine einfache, vollautomatisch vorzunehmende feste Verbindung zwischen Tragplatte und Stanzgitter ergibt sich durch die Merkmale gemäß Anspruch 4.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: die Draufsicht auf einen Bürstenhalter für mit einem Kollektor versehene Elektromotoren gemäß einem bevorzugten Ausführungsbeispiel vorliegender Erfindung, jedoch ohne elektrische Bauteile und ohne Kohlebürsten;
- Figur 2: eine Draufsicht auf ein beim Bürstenhalter nach Figur 1 verwendetes Stanzgitter im ebenen Ausgangszustand;
- Figur 3: eine Seitenansicht gemäß Pfeil III der Figur 2, jedoch in für die Montage an einer Tragplatte geeignetem gebogenem Zustand;
- Figur 4: einen Schnitt längs der Linie IV-IV der Figur 2, jedoch ebenfalls entsprechend dem in Figur 3 dargestellten Zustand;
- Figur 5: einen Schnitt längs der Linie V-V der Figur 1, jedoch der Tragplatte allein, und
- Figur 6: einen Schnitt längs der Linie VI-VI der Figur 1, d.h. in fertig montiertem Zustand des Bürstenhalters.

Der in der Zeichnung dargestellte Bürstenhalter 10 dient zum Anbau an einen mit einem Kollektor versehenen Elektromotor. Der Bürstenhalter 10 besteht im wesentlichen aus einer Tragplatte 11, die aus einem elektrisch isolierenden Material gefertigt und dabei vorzugsweise aus einem Kunststoff gespritzt ist, und aus einem Stanzgitter 12 aus einem elektrisch leitenden Material, vorzugsweise aus einem Metall. Das Stanzgitter 12 ist an der Tragplatte 11 durch Verstemmen befestigt. In nicht dargestellter Weise ist der Bürstenhalter 10 mit elektrischen Bauelementen, wie Thermoschalter, Entstörbauteile, bspw. in Form einer oder mehrerer Spulen, versehen, die in Aufnahmen an der Tragplatte 11 gehalten sind.

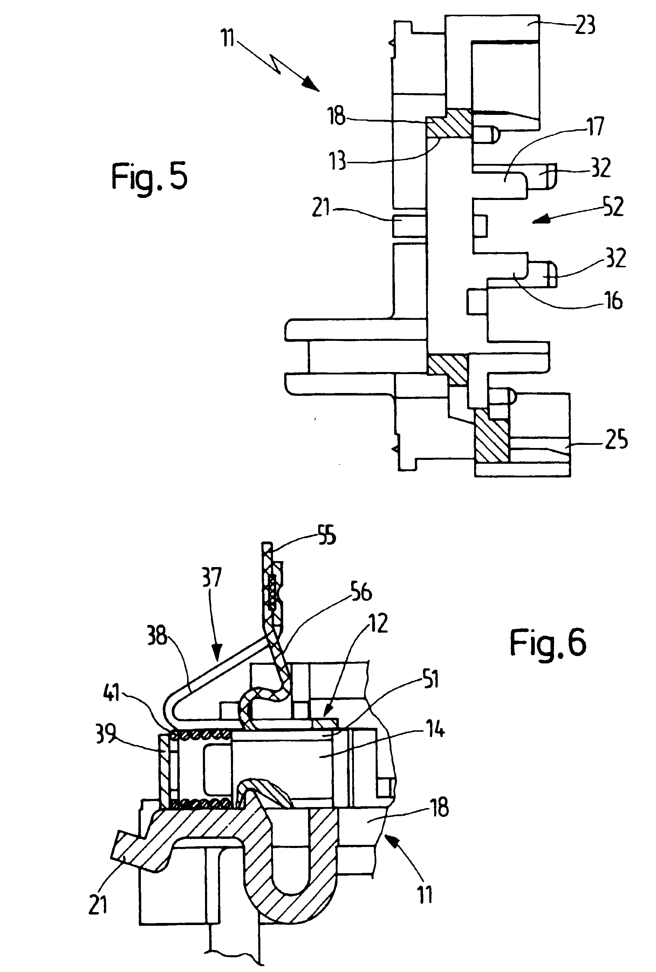

Teil der Tragplatte 11 des Bürstenhalters 10 ist eine ebene Scheibe 18, die mit einer Reihe von Durchbrüchen versehen ist und von deren Oberflächen beidseitig verschiedene Ansätze senkrecht abstehen. Diese einstückig aus Kunststoff gespritze Tragplatte 11 besitzt eine zentrale kreisrunde Aussparung 13, in der sich bei zusammengebautem Elektromotor der Kollektor des Motorankers befindet. An zwei einander gegenüberliegenden Stellen, die gegenüber der betreffenden Querachse versetzt sind, ist die Tragplatte 11 mit jeweils zwei von ihrer Grundfläche abstehenden parallelen Führungsstegen 16 und 17 Versehen, die eine Führung und Teil eines Kochers 51, 52 für die einzubringenden Kohlebürsten 14 und 15 (vgl. Figur 6) dienen. Die Abmessungen der beiden Führungsstege 16 und 17 sind derart, daß sie zusammen mit der Oberfläche der Tragplatte 13 eine U-förmige Führung bilden, deren Tiefe und Breite den entsprechenden Querschnittsabmessungen der Kohlebürste 14, 15 entspricht. Die Scheibe 18 der Tragplatte 11 ist im Bereich zwischen den beiden Führungsstegen 16 und 17 jeweils mit einer Schlitzausnehmung 19 versehen, in welcher sich eine Entriegelungsfeder 21 befindet, deren eines Ende an der Unterseite der Scheibe 18 im Bereich der zentralen Aussparung 13 angeformt ist und deren anderes freies Ende den Außenumfang der Tragplatte 11 etwas überragt. Um etwas 90° gegenüber den jeweiligen Führungsstegpaaren 16 und 17 versetzt besitzt die Tragplatte 11 nach oben abstehende Ansätze 22 und 23 bzw. 24 und 25, die jeweils eine von oben her offene Einsteckaufnahme 26 bzw. 27 für bspw. einen Thermoschalter bzw. eine Entstördrossel bilden. Im Bereich der Einsteckaufnahme 27 ist die Scheibe 18 der Tragplatte 11 mit zwei Durchgangsbohrungen 28 verstehen. Eine weitere rechteckförmige Durchgangsausnehmung 29 in der Scheibe 18 bzw. in deren nach unten angeformtem Ansatz befindet sich in einem Bereich zwischen dem einen Ansatz 25 der Einsteckaufnahme 27 und dem gegenüberliegenden Führungssteg 17 des Köchers 52 für die eine Kohlebürste 15.

Die Tragplatte 11 besitzt außerdem an verschiedenen Bereichen der Scheibe 18 von deren Oberfläche vorstehende kreisrunde Ansätze bzw. Anformungen, die als Verstemmansätze 31 ausgebildet sind, ebenso wie Führungsansätze 32 an den Außenflächen der führungsstege 16 und 17, die teilweise ebenfalls zum Verstemmen der Tragplatte 11 mit dem in Form gebogenen Stanzgitter 12 dienen.

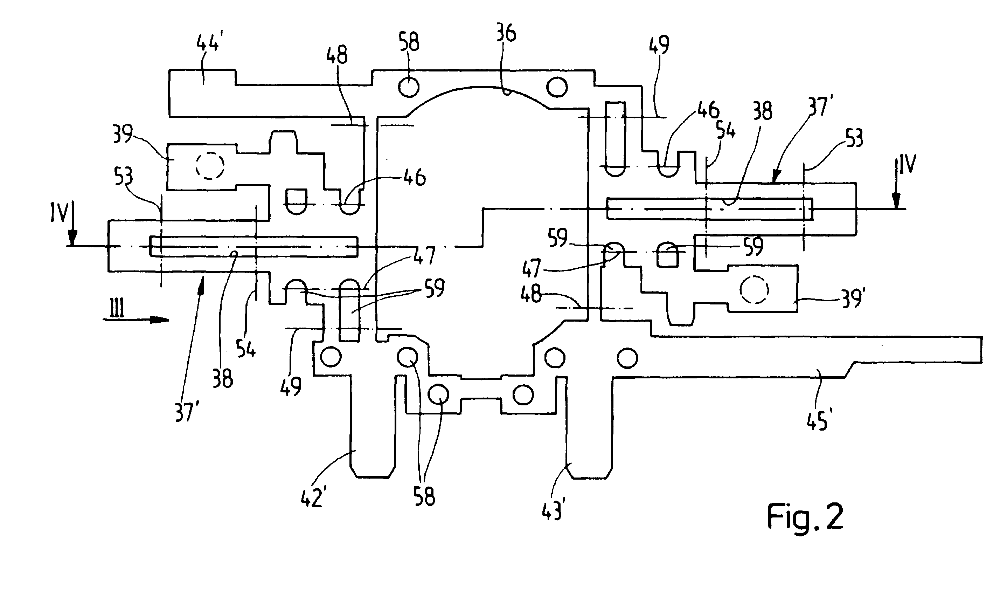

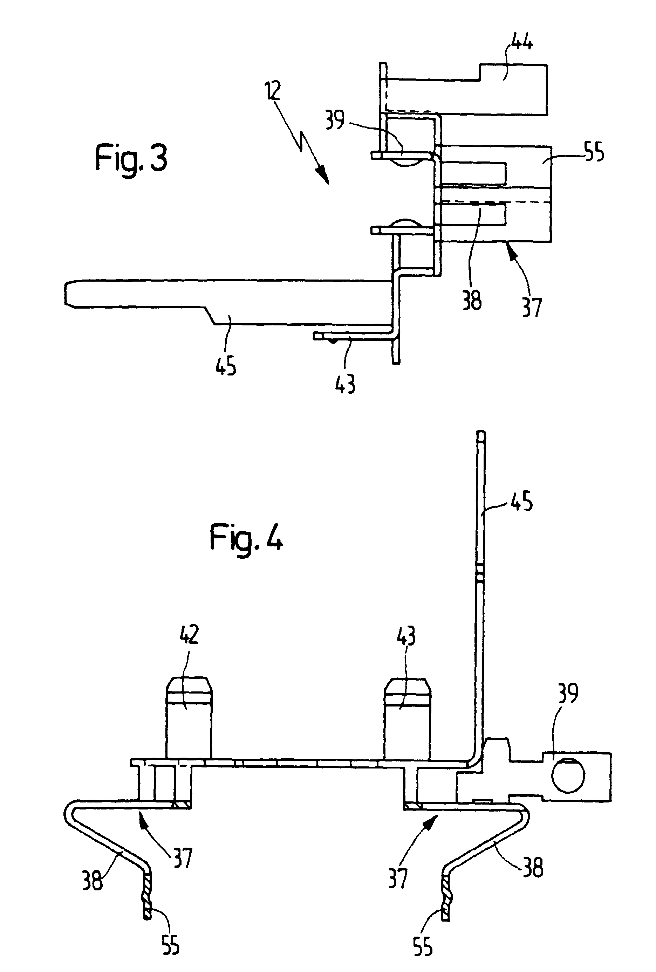

Gemäß Figur 2 ist der Stanzgitter-Rohling 12' in einem einzigen Arbeitsgang aus einem ebenen Blech ausgestanzt. Aus dem Rohling 12' wird das Stanzgitter 12 dann gemäß den Figuren 3 und 4 in eine Form gebogen, die es ermöglicht, das Stanzgitter 12 mit der Tragplatte 11 zu verbinden und zu verstemmen. Der Stanzgitter- Rohling 12' gemäß Figur 2 besitzt eine zentrale Aussparung 36, die an gegenüberliegenden Innenbereichen teilweise kreisrund entsprechend der zentralen Aussparung 13 in der Tragplatte 11 ausgebildet ist. Einander diametral gegenüberliegend und gegenüber einer Achse versetzt sind Lappen 37' vorgesehen, die, wie noch zu zeigen sein wird, einen Bereich 37 beinhalten, der eine Abdeckung der U-förmigen Führung 16,17 für die Kohlebürste 14 und damit des Köchers 51, 52 bildet. Der Lappen 37' ist mit einem Längsschlitz 38 versehen, dessen Enden jeweils einen Abstand von der inneren Begrenzung der zentralen Aussparung bzw. von den freien Enden des Lappens 37' besitzt. Parallel zu jedem Lappen 37' ist ein weiterer Lappen 39' vorgesehen, der in fertig montiertem Zustand den Verschlußlappen 39 für die Kohlebürste 14 bildet, zwischen welchen beiden Teilen gemäß Figur 6 eine Druckfeder 41 angeordnet ist. Um etwa 90° gegenüber den Lappen 37' und 39' versetzt sind in Abstand zueinander parallele Stege 42' und 43' angeordnet, die in montiertem Zustand Anschlußfahnen 42 und 43 für bspw. eine Entstördrossel bilden. Weitere Stege 44' und 45' sind parallel zu den Lappen 39' angeordnet, welche Stege Anschlußfahnen 44 bzw. 45 für den nicht dargestellten Thermoschalter bzw. einen Spannungspol bilden.

Gemäß Figur 2 einerseits und den Figuren 3 und 4 andererseits wird der Stanzgitter-Rohling 12' an den parallel zu den Lappen 37' verlaufenden Linien 46 und 47 nach unten und an den Linien 48 und 49 wieder entgegengesetzt umgebogen. Dadurch ergibt sich der Abdeckbereich 37 über den Führungsstegen 16 und 17 der U-förmigen Kohlebürstenführung, wodurch jeweils der Köcher 51 bzw. 52 gebildet ist, der die betreffende Kohlebürste 14, 15 aufnimmt. Längs der Querlinien 53 und 54 wird der Lappen 37' quer zu seiner Längserstreckung zweifach umgebogen, so daß sich eine Anschlußfahne 55 für eine mit der Kohlebürste 14 bzw. 15 verbundene Kohlelitze 56 (vgl. Fig. 6) ergibt. Durch diese Biegung des Lappens 37' längs der Linie 54 ist der Längsschlitz 38 von der der zentralen Aussparung 13 bzw. 36 abgewandten Seite her offen, so daß beim Einschieben der Kohlebürste 14 bzw. 15 in den Kocher 51 bzw. 52 deren Kohlelitze 56 in den Längsschlitz 38 aufgenommen und in maschineller Weise mit dem Ende der Anschlußfahne 55 verbunden, bspw. verlötet, werden kann (vgl. Figur 6). Erst in diesem Zustand wird dann am hinteren Ende der Kohlebürste 14 die Druckfeder 41 angesetzt und durch Umbiegen des Verschlußlappens 39 gehalten.

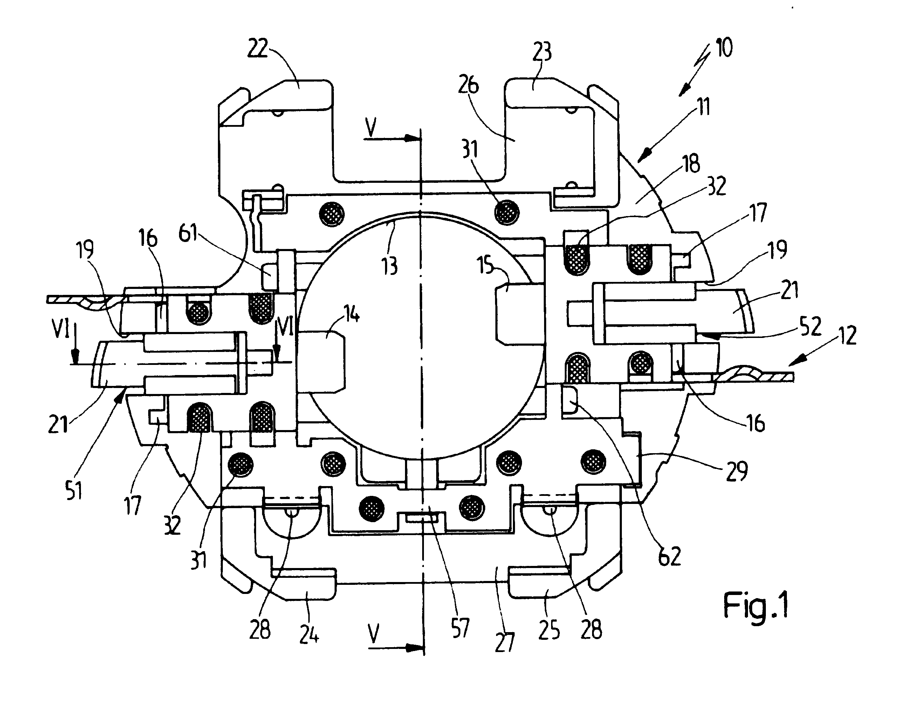

Es versteht sich, daß auch die Stege 42',43',44' und 45' längs vorbestimmter Linien nach unten bzw. oben umgebogen werden, bevor das Stanzgitter 12 in bzw. auf die Tragplatte 11 gesetzt wird. Einzig der Steg 44' wird nach oben umgebogen, damit dessen Ende in der Anschlußhöhe des Thermoschalters liegt. Die anderen Stege 42',43' und 45' werden durch die betreffenden Ausnehmungen 28 und 29 in der Tragplatte 11 gesteckt. Werden die Anschlußfahnen 42 und 43 mit einer Entstördrossel verbunden, so wird der Verbindungsbereich zwischen den Anschlußfahnen bspw. an der Stelle 57 (vgl. Fig.1) durch einen Stanzvorgang unterbrochen, der mit dem Vorgang des Verstemmens von Stanzgitter 12 und Tragplatte 11 vorgenommen werden kann.

Zum Verstemmen des Stanzgitters 12 mit der Tragplatte 11 ist das Stanzgitter 12 mit mehreren kreisrunden und länglichen Aussparungen 58 bzw. 59 versehen, durch die beim Aufsetzen des Stanzgitters 12 auf die Tragplatte 11 die Verstemmansätze 31 bzw. Führungsansätze 32 dringen. Das Verstemmen der beiden Bauteile miteinander erfolgt in der weise, daß bei aufgesetztem Stanzgitter 12 zumindest die Verstemmansätze 31 an ihren über das Stanzgitter 12 ragenden Enden verformt werden. In auf die Tragplatte befestigtem Zustand wird das Stanzgitter 12 außerdem an weiteren Stellen 61 und 62 getrennt, um eine entsprechende elektrische Schaltungsanordnung bzw. Leitungsverbindung zu erreichen (vgl. Fig. 1).

Aus Figur 6 ergibt sich ferner, daß die Entriegelungsfeder 21 dazu dient, die Kohlebürste 14 bzw. 15 während des Einbringens des Kollektors des Elektromotors in die zentrale Aussparung 13 bzw. 36 in zurückgezogenem Zustand gehalten wird. Danach kann durch Druck auf die Entriegelungsfeder 21 in Richtung des Pfeiles D die Kohlebürste 14 durch die Druckfeder 41 innerhalb seines Köchers 51 bzw. 52 zum Umfang des Kollektors hin gebracht werden.

## Patentansprüche

1. Bürstenhalter für mit einem Kollektor versehene Elektromotoren mit einer Tragplatte (11) aus einem elektrisch isolierenden Material, vorzugsweise gespritztem Kunststoff, an der Aufnahmen (26, 27) für elektrische Bauteile vorgesehen sind, und mit mindestens zwei gegenüberliegenden Köchern (51, 52) für Kohlebürsten, wobei jeder Köcher (51, 52) einerseits durch eine in der Tragplatte (11) vorgesehene, im wesentlichen U-förmige Kohlebürstenführung (16, 17) und andererseits durch ein die Kohlebürstenführung (16, 17) überdeckendes Stanzgitter (12) gebildet ist, das mit einem Verschlusslappen (39) für den Köcher (51, 52) versehen ist, wobei für alle Köcher (51, 52) ein einziges Stanzgitter (12) auf die Tragplatte (11) aufgebracht und mit entsprechenden elektrischen Trennstellen (57, 61, 62) versehen ist, **dadurch gekennzeichnet**, dass ein die Kohlebürstenführung (16, 17) abdeckender Bereich (37) des Stanzgitters (12) mit einer Anschlussfahne (55) für eine Kohlebürstenlitze (56) versehen ist, wobei die Anschlussfahne (55) für die Kohlebürstenlitze (56) durch eine nach oben umgebogene Verlängerung (37') des die Kohlebürstenführung (16, 17) überdeckenden Bereichs (37) des Stanzgitters (12) gebildet ist, wobei der Verschlusslappen (39) zum Verschließen des Köchers (51, 52) durch eine seitlich umgebogene Verlängerung (39') eines die Kohlebürstenführung (16, 17) seitlich begrenzenden Bereichs des Stanzgitters (12) gebildet ist und wobei der die Kohlebürstenführung (16, 17) überdeckende Bereich (37) des Stanzgitters (12) und die Anschlussfahne (55) für die Kohlebürstenlitze (56) mit einem Längsschlitz (38) für die Kohlebürstenlitze (56) versehen ist.

2. Bürstenhalter nach Anspruch 1, dadurch gekennzeichnet, dass das Stanzgitter (12) mit Anschlussfahnen (42 bis 45) für elektrische Bauteile, wie Thermoschalter und/oder Entstörelemente und/oder dergleichen, versehen ist.

3. Bürstenhalter nach Anspruch 2, dadurch gekennzeichnet, dass zwischen zwei Anschlussfahnen (42, 43) eine Trennstelle (57) in das Stanzgitter (12) einbringbar ist.

4. Bürstenhalter nach einem der Ansprüche 1 bis 3, dadurch gekennzeichnet, dass die Tragplatte (11) mit Anspritzungen (31, 32) versehen ist, über die sie mit dem Stanzgitter (12) verstemmbar ist.

## Claims

1. Brush holder for an electric motor provided with a collector and with a base plate (11) made of electrically insulating material, preferably injection moulded plastics material, on which receivers (26, 27) for electrical components are provided, and with at least two opposing cartridges (51, 52) for carbon brushes, wherein each cartridge (51, 52) is formed on the one hand by a substantially U-shaped carbon brush guide (16, 17) provided in the base plate (11) and, on the other hand, by a pressed screen (12) covering the carbon brush guide (16, 17) which pressed screen is provided with a sealing tab (39) for the cartridge (51, 52), wherein a single pressed screen (12) is applied to the base plate (11) for all cartridges (51, 52) and is provided with appropriate electrical separating points (57, 61, 62), characterised in that a region (37) of the pressed screen (12) covering the carbon brush guide (16, 17) is provided with a terminal lug (55) for a flexible lead of a carbon brush (56), wherein the terminal lug (55) for the flexible lead of the carbon brush (56) is formed by an extension (37'), which is bent upwards, of the region (37) of the pressed screen (12) covering the carbon brush guide (16, 17) , wherein the sealing tab (39) for sealing the cartridge (51, 52) is formed by an extension (39'), which is laterally bent upwards, of a region of the pressed screen (12) laterally delimiting the carbon brush guide (16, 17) and wherein the region (37) of the pressed screen (12) covering the carbon brush guide (16, 17) and the terminal lug (55) for the flexible lead of the carbon brush (56) is provided with a longitudinal slot (38) for the flexible lead of the carbon brush (56) .

2. Brush holder according to claim 1, characterised in that the pressed screen (12) is provided with terminal lugs (42 to 45) for electrical components, such as thermostatic switches and/or suppressor elements and/or the like.

3. Brush holder according to claim 2, characterised in that a separating point (57) can be introduced into the pressed screen (12) between two terminal lugs (42, 43).

4. Brush holder according to one of claims 1 to 3, characterised in that the base plate (11) is provided with sprayed-on parts (31, 32) by means of which it can be caulked to the pressed screen (12).

## Revendications

1. Porte-balais, pour moteur électrique à collecteur, comprenant une plaque de support (11), qui est en une matière électriquement isolante, de préférence en matière plastique moulée par injection, et sur laquelle des logements (26, 27) sont prévus pour des composants électriques, et d'au moins deux étuis (51, 52) disposés en regard l'un de l'autre et destinés à des balais en charbon, chaque étui (51, 52à) étant formé, d'une part, par un guide de balai en charbon (16, 17) prévu dans la plaque de support (11) et essentiellement en forme de U et, d'autre part, par une grille découpée à l'emporte-pièce (12) recouvrant ce guide (16, 17), grille qui est pourvue d'une patte d'obturation (39) pour l'étui (51, 52), pour tous les étuis (51, 52), une grille découpée à l'emporte-pièce (12à) unique étant montée sur la plaque de support (11) et étant pourvue d'emplacements d'isolation électrique (57, 61, 62) appropriés, caractérisé en ce qu'une partie (37) de la grille découpée à l'emporte-pièce (12) qui recouvre le guide de balai de charbon (16, 17) est pourvue d'une patte de raccordement (55) pour un fil de balai en charbon (56) , la patte de raccordement (55) prévue pour le fil de balai en charbon (56), la patte de raccordement (55) prévue pour le fil de balai en charbon (56) étant formée par une partie de prolongement (37'), pliée vers le haut, de la partie (37) de la grille découpée à l'emporte-pièce (12) qui recouvre le guide de balai en charbon (16, 17), la patte d'obturation (39) pour la fermeture de l'étui (51, 52) étant formée par un prolongement (39'), plié latéralement, d'un domaine de la grille découpée à l'emporte-pièce (12), domaine qui délimite latéralement le guide de balai en charbon (16, 17) , et la partie (37) de la grille découpée à l'emporte-pièce (12) qui recouvre le guide de balai en charbon (16, 17) et la patte de raccordement (55) prévue pour le fil de balai en charbon (56) sont pourvues d'une fente longitudinale (38) pour le fil de balai en charbon (56) .

2. Porte-balais suivant la revendication 1, caractérisé en ce que la grille découpée à l'emporte-pièce (12) est pourvue de pattes de raccordement (42 à 45) pour des composants électriques, tels que thermo-interrupteur et/ou éléments de suppression de parasites et/ou analogue.

3. Porte-balais selon la revendication 2, caractérisé en ce qu'un emplacement de séparation (5.7) peut être réalisé dans la grille découpée à l'emporte-pièce (12) entre deux pattes de raccordement (42, 43).

4. Porte-balais selon l'une des revendications 1 à 3, caractérisé en ce que la plaque de support (11) est pourvue de parties formées au moulage par injection (31, 32) au moyen desquelles elle peut être fixée par sertissage sur la grille découpée à l'emporte-pièce (12).
